# EUROPEAN PATENT SPECIFICATION

(11) **EP 3 388 684 B1**
(45) Date of publication and mention of the grant of the patent: **29.01.2020**
(21) Application number: 18166734.6
(22) Date of filing: 11.04.2018
(51) Int. Cl.: F04D 25/16, F04D 29/42

(54) **CENTRIFUGAL BLOWER UNIT**
ZENTRIFUGALGEBLÄSEEINHEIT
UNITÉ DE VENTILATEUR CENTRIFUGE

(30) Priority: 11.04.2017 JP 2017078216
(43) Date of publication of application: 17.10.2018
(73) Proprietor: Valeo Japan Co., Ltd., Saitama 360-0193 (JP)
(72) Inventor: YOSHIZAKI, Hisayoshi, Saitama, 360-0193 (JP); ARAKI, Daisuke, Saitama, 360-0193 (JP); NAGANO, Hideki, Saitama, 360-0193 (JP); SHICHIKEN, Yutaka, Saitama, 360-0193 (JP)
(74) Representative: Metz, Gaëlle

(56) References cited:
- WO-A1-2016/066739
- DE-A1- 19 963 796
- US-A1- 2009 208 327

## Description

### BACKGROUND OF THE INVENTION

### 1. Field of the Invention

The present disclosure relates to a centrifugal blower unit to be applied to a two-layer flow vehicle air conditioner in which inside air and outside air of a vehicle can flow at the same time.

### 2. Description of the Related Art

As a blower unit to be applied to a two-layer flow (inside and outside air) vehicle air conditioner, there is a known blower unit in which inside air and outside air of a vehicle can be inhaled separately at the same time by rotating an impeller via one motor and ganging an intake door (see, for example, Patent Literature 1 and 2).

Patent Literature 1 and 2 disclose an example of the structure in which the lower scroll case is engaged with the partitioning plate and the partitioning plate is engaged with the upper scroll case, as the structure of this type of blower unit. With this, the inside of the scroll case is partitioned vertically by the partitioning plate so that inside air and outside air can be inhaled separately.

In addition, when outside air is inhaled by this type of blower unit, rain water or snow included in outside air may be inhaled together and may enter the upper air passage of the scroll case. When rain water or snow reaches the engagement part between the partitioning plate and the upper scroll case, water leakage to the outside of the scroll may occur due to capillary phenomenon.

However, since the blower unit in Patent Literature 1 has the upper air passage and the lower air passage communicating with each other and the partitioning plate has a communicating hole through which water in the upper air passage flows to the lower air passage. This disables water from reaching the engagement part between the partitioning plate and the upper scroll case and prevents occurrence of water leakage to the outside of the scroll.

Patent Literature 1: JP-A-2015-067260
Patent Literature 2:WO2016/066739A1

Although the blower unit disclosed in Patent Literature 1 has the communicating hole that communicates the upper air passage with the lower air passage, such communication holes cannot be formed continuously. Accordingly, it is impossible to completely prevent water having entered the upper air passage from reaching the engagement part between the partitioning plate and the upper scroll case through the part between one communicating hole and another communicating hole.

### SUMMARY OF THE INVENTION

An object of the disclosure is to provide a blower unit capable of preventing occurrence of water leakage to the outside of the scroll by disabling water having entered the upper air passage from reaching the engagement part between the partitioning plate and the upper scroll case.

A centrifugal blower unit (1, 1') to be applied to a two-layer flow vehicle air conditioner including a first air passage (10) and a second air passage (20) partitioned vertically by a partitioning part (S), the two-layer flow vehicle air conditioner having a two-layer flow mode in which outside air (AE) is introduced to the first air passage and inside air (AR) is introduced to the second air passage, the centrifugal blower unit characterized by including a first impeller (11) disposed in the first air passage; a second impeller (21) disposed in the second air passage; a motor (M) having a rotary shaft; an intermediate scroll member (30) having the partitioning part (S); a spiral first scroll member (12) forming the first air passage by being engaged with the intermediate scroll member; and a spiral second scroll member (22) forming the second air passage by being engaged with the intermediate scroll member; in which a first engagement part (13) formed by the intermediate scroll member and the first scroll member is positioned closer to an upper bottom surface (12a) than a first air passage intermediate surface (P1) that is an intermediated surface between the partitioning part and the upper bottom surface (12a) of the first scroll member, the upper bottom surface facing the partitioning part (claim 1) .

In the centrifugal blower unit according to the invention, preferably, the intermediate scroll member integrally includes a spiral intermediate scroll outer peripheral surface extending substantially along a shaft direction of the rotary shaft and the partitioning part, and the partitioning part is a surface extending from the intermediate scroll outer peripheral surface substantially along a surface orthogonal to the shaft direction of the rotary shaft (claim 2). Since the intermediate scroll outer peripheral surface is integrated with the partitioning part, it is possible to prevent occurrence of water leakage from the intermediate scroll member to the outside of the blower unit.

In the centrifugal blower unit according to the invention, preferably, the first engagement part is positioned closer to the upper bottom surface than an upper bottom surface side end part of the first impeller (claim 3). Since the first engagement part is positioned closer to the upper bottom surface than the upper bottom surface side end part of the first impeller (that is, the first engagement part is positioned above the first impeller), the first engagement part is positioned above the rain water or snow blown to the first air passage and the amount of water that reaches the first engagement part can be reduced.

In the centrifugal blower unit according to the invention, preferably, a second engagement part formed by the intermediate scroll member and the second scroll member is positioned closer to the partitioning part than a second air passage intermediate surface that is an intermediate surface between the partitioning part and a lower bottom surface of the second scroll member, the lower bottom surface facing the partitioning part (claim 4). Even when the outside air passing through the second air passage includes rain water or snow in an all outside air mode, since the second engagement part is positioned above the lower bottom surface, the amount of water that reaches the second engagement part can be reduced.

In the centrifugal blower unit according to the invention, preferably, the second scroll member integrally includes a spiral second scroll outer peripheral surface extending substantially along the shaft direction of the rotary shaft and the lower bottom surface facing the partitioning part, and the lower bottom surface is a surface extending from the second scroll outer peripheral surface substantially along a surface orthogonal to the shaft direction of the rotary shaft (claim 5). Since the second scroll outer peripheral surface is integrated with the lower bottom surface, it is possible to prevent occurrence of water leakage from the second scroll member to the outside of the blower unit.

According to the disclosure, it is possible to provide a blower unit capable of preventing occurrence of water leakage to the outside of the scroll by disabling water having entered the upper air passage from reaching the engagement part between the partitioning plate and the upper scroll case.

### BRIEF DESCRIPTION OF THE DRAWINGS

Fig. 1 is a longitudinal cross sectional view schematically illustrating an example of a vehicle air conditioner having a centrifugal blower unit according to the embodiment.
Fig. 2 is a partial schematic view enlarging a region indicated by X in Fig. 1.
Fig. 3 is a partial schematic view illustrating a centrifugal blower unit according to a modification of the embodiment.

### DESCRIPTION OF THE PREFERRED EMBODIMENTS

An aspect of the invention will be described with reference to the drawings. Since the embodiment described below is an example of the invention, the invention is not limited to the embodiment. It should be noted that components having the same reference numeral are identical to each other. As long as the effects of the invention are obtained, various modifications can be made.

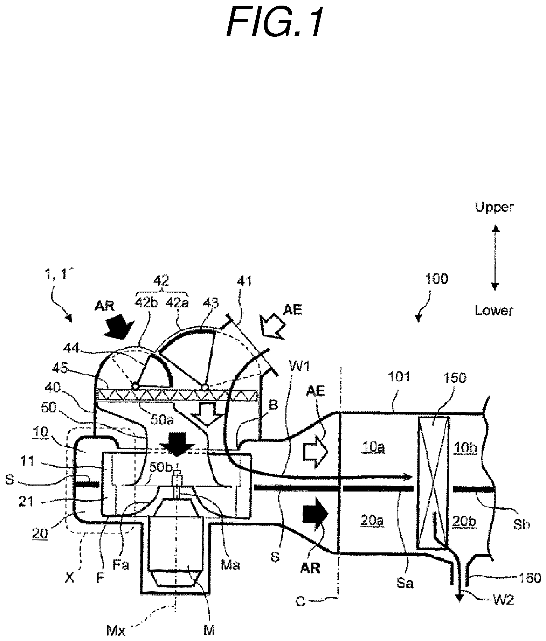

Fig. 1 is a longitudinal cross sectional view schematically illustrating an example of the vehicle air conditioner having the centrifugal blower unit according to the embodiment. As illustrated in Fig. 1, a centrifugal blower unit 1 or 1' according to the embodiment is applied to a two-layer flow vehicle air conditioner that has a first air passage 10 and a second air passage 20 partitioned vertically by a partitioning part S and has the two-layer flow mode in which outside air AE is introduced to the first air passage 10 and inside air AR is introduced to the second air passage 20. The centrifugal blower unit 1 or 1' and an air conditioning unit 100 are connected to each other via a connection part C to form the vehicle air conditioner.

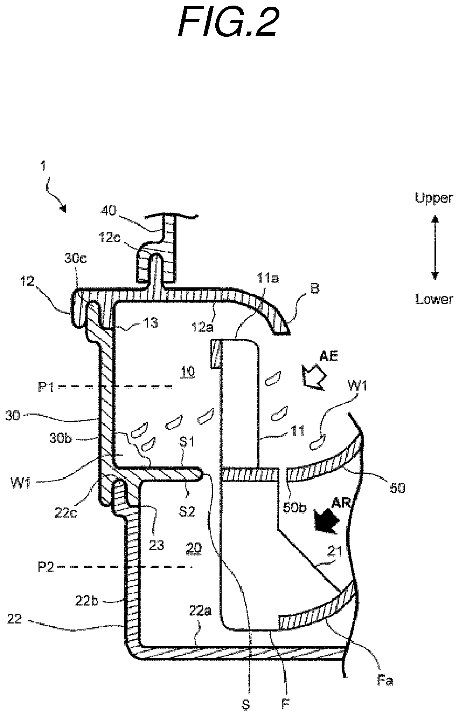

The centrifugal blower unit 1 or 1' includes a first impeller 11 disposed in the first air passage 10, a second impeller 21 disposed in the second air passage 20, and a motor M having a rotary shaft Ma. In addition, as illustrated in Fig. 2, the centrifugal blower unit 1 or 1' includes an intermediate scroll member 30 having the partitioning part S, a first scroll member 12 forming the first air passage 10 by being engaged with the intermediate scroll member 30, and a second scroll member 22 forming the second air passage 20 by being engaged with the intermediate scroll member 30. By laminating the three scroll members 12, 22, and 30 with each other, the centrifugal blower unit 1 or 1' having the partitioning part S can be manufactured easily. The first scroll member 12, the second scroll member 22, and the intermediate scroll member 30 are configured so as to extend spirally from the rotary shaft Ma of the motor as the center (not illustrated). The first scroll member 12 has the part that is engaged with the intermediate scroll member 30 and a bell mouth B that becomes the air inlet of the outside air AE and the inside air AR.

The first impeller 11 is continued to the second impeller 21 as illustrated in Figs. 1 and 2 in the embodiment and the first impeller 11 and the second impeller 21 are molded integrally with a cone part Fa to configure a fan F. Many first impellers 11 and second impellers 21 are disposed distantly from a shaft center Mx of the rotary shaft by a predetermined distance to form an array of wings. The fan F is coupled and fixed to the rotary shaft Ma at the center of the cone part Fa, is rotated when the motor M is driven, and blows the air within the inner space of the fan F toward the outer space (that is, the first air passage 10 and the second air passage 20) of the fan F.

As illustrated in Fig. 1, the centrifugal blower unit 1 or 1' according to the embodiment has a separation cylinder 50 for separating the internal space of the fan F. The separation cylinder 50 is a cylindrical component that guides the air introduced from an outside air introduction port 41 and/or an inside air introduction port 42 to the internal space of the fan F while separating the air. The separation cylinder 50 is fixed to the first scroll member 12 by a rib (not illustrated) bridging across the outer periphery of the separation cylinder and the bell mouth B. Alternatively, the separation cylinder 50 is supported by an intake part 40, which will be described later. The air flowing between the outer periphery of the separation cylinder 50 and the bell mouth B is blown to the first air passage 10 by the first impeller 11. The air that flows into an upstream end 50a of the separation cylinder 50 and flows out of a downstream end 50b is blown to the second air passage 20 by the second impeller 21.

As illustrated in Fig. 1, in the centrifugal blower unit 1 or 1', the intake part 40 is connected to the upstream side in the flow direction of air.

The intake part 40 includes the outside air introduction port 41, the inside air introduction port 42, and a first door 43 and a second door 44 that perform switching between inside air and outside air. In addition, although the intake part 40 is configured separately from the centrifugal blower unit 1 or 1', the intake part 40 may be configured integrally with the centrifugal blower unit 1 or 1'. Fig. 2 illustrates the structure in which the case of the intake part 40 is engaged with a projecting part 12c of the first scroll member 12 as an example of a separate configuration.

The first door 43 moves between the outside air introduction port 41 and a part 42a of the inside air introduction port 42 in proximity to the outside air introduction port 41 and changes the ratio between the inside air AR and the outside air AE of the air flowing between the outer periphery of the separation cylinder 50 and the bell mouth B.

The second door 44 moves between the side of the first door 43 and a part 42b of the inside air introduction port 42 away from the outside air introduction port 41 and changes the ratio between the inside air AR and the outside air AE of the air flowing inside the separation cylinder 50.

As illustrated in Fig. 1, the intake part 40 preferably has a filter 45 on the downstream side of the movable areas of the first door 43 and the second door 44. The air introduced from the outside air introduction port 41 and/or the inside air introduction port 42 can be cleaned.

The partitioning part S included in the centrifugal blower unit 1 or 1' partitions the space radially outward of the first impeller 11 and the second impeller 21 into the first air passage 10 and the second air passage 20. The partitioning part S extends not only to the proximity in the radial direction of the fan F, but also to the connection part C between the centrifugal blower unit 1 or 1' and the air conditioning unit 100.

The air conditioning unit 100 is connected to the downstream side of the centrifugal blower unit 1 or 1'. In the internal space of a unit case 101, a cooling heat exchanger 150 connected to a freezing cycle (not illustrated) is disposed. In addition, on the downstream side of a the cooling heat exchanger 150, a heating heat exchanger, a well-known air mix door, a blowout opening to the interior of a vehicle, and an open-close door for opening and closing the blowout opening are present (none of them are illustrated).

Of the inner space of the unit case 101, the part on the upstream side of the cooling heat exchanger 150 is partitioned into a unit first air passage 10a and a unit second air passage 20a by a unit partitioning part Sa. In addition, of the inner space of the unit case 101, the part on the downstream side of the cooling heat exchanger 150 is preferably partitioned into a unit first air passage 10b and a unit second air passage 20b by a unit partitioning part Sb.

The air conditioning unit 100 has a drain hole 160 below the cooling heat exchanger 150. Condensed water W2 generated when air of the unit first air passage 10a and air of the unit second air passage 20a are cooled by the cooling heat exchanger 150 passes through the drain hole 160 and is drained to the outside of the vehicle.

Next, the operation in the two-layer flow mode in which inside air and outside air pass at the same time will be described.

First, the motor M is started up, the rotary shaft Ma and the fan F are rotated to generate an air flow for blowing the air within a vehicle air conditioner toward the interior of the vehicle.

As illustrated in Fig. 1, the first door 43 opens the outside air introduction port 41 and closes one part (the part of the inside air introduction port 42 in proximity to the outside air introduction port 41) 42a of the inside air introduction port. The second door 44 closes the side of the first door 43 and opens the other part (the part of the inside air introduction port 42 away from the outside air introduction port 41) 42b of the inside air introduction port.

With this, the outside air AE is inhaled from the outside air introduction port 41 to the intake part 40, flows through one side of the filter 45, the space between the outer periphery of the separation cylinder 50 and the bell mouth B, the first impeller 11, the unit first air passage 10a, the cooling heat exchanger 150, the unit first air passage 10b, and the heating heat exchanger in sequence, and is blown to the interior of the vehicle through the blowout opening.

At the same time, the inside air AR is inhaled from the inside air introduction port 42b to the intake part 40, flows through the other side of the filter 45, the inside of the separation cylinder 50, the second impeller 21, the unit second air passage 20a, the cooling heat exchanger 150, and the unit second air passage 20b, the heating heat exchanger in sequence, and is blown to the interior of the vehicle through the blowout opening.

As illustrated in Fig. 1, the outside air AE inhaled from the outside air introduction port 41 to the intake part 40 may include rain water W1. The rain water W1 is taken into the intake part 40 through the outside air introduction port 41, passes through one end of the filter 45, the space between the outer periphery of the separation cylinder 50 and the bell mouth B, the first impeller 11, the unit first air passage 10a, the cooling heat exchanger 150, and the drain hole 160 in sequence, and is exhausted to the outside of the vehicle. When the freezing cycle is started up and condensed water is generated by the cooling heat exchanger, the rain water W1 passes through the drain hole 160 together with the condensed water W2 and is exhausted to the outside of the vehicle through the drain hole 160.

As illustrated in Fig. 2, the outside air AE may include the rain water W1. Since the rain water W1 blown from the first impeller 11 has a specific gravity larger than air, the rain water W1 is blown to the part below the first air passage 10 and then coagulated.

In the centrifugal blower unit 1 illustrated in Fig. 2, a first engagement part 13 formed by the intermediate scroll member 30 and the first scroll member 12 is positioned above the first air passage 10. More specifically, the first engagement part 13 is positioned closer to an upper bottom surface 12a than a first air passage intermediate surface P1, which is an intermediate surface between a partitioning surface S1 of the partitioning part S close to the first air passage 10 and an upper bottom surface 12a of the first scroll member 12 facing the partitioning surface S1. Since the first engagement part 13 is positioned above the partitioning surface S1 as described above, the possibility that the rain water W1 having been blown to the part below the first air passage 10 and then coagulated reaches the first engagement part 13 can be reduced, thereby preventing water leakage to an intermediate scroll outer peripheral surface 30b.

In addition, the first engagement part 13 is positioned closer to the upper bottom surface 12a than an upper bottom surface side end part 11a of the first impeller. Since the first engagement part 13 is positioned above the first impeller 11 as described above, the possibility that the rain water W1 having been blown to the part below the first impeller 11 reaches the first engagement part 13 can be further reduced.

As illustrated in Fig. 2, a projecting part 30c of the intermediate scroll member 30 to be engaged with the first scroll member 12 is preferably projects toward the part above the first engagement part 13. Even if rain water reaches the first engagement part 13 and enters the gap, since the projecting part 30c projects upward, water leakage to the intermediate scroll outer peripheral surface 30b can be suppressed by gravity.

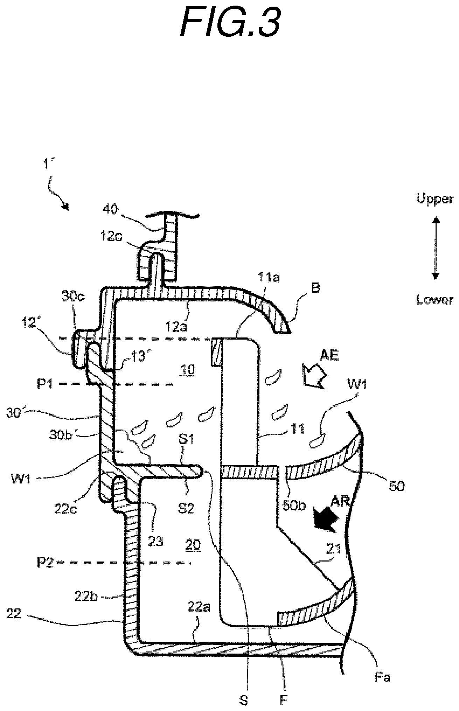

Fig. 3 is a partial schematic view illustrating the centrifugal blower unit 1' according to the modification of the embodiment. Fig. 3 is different from Fig. 2 in that the position of the first engagement part 13' in the shaft direction of the rotary shaft Ma is lower than the upper bottom surface side end part 11a of the first impeller. However, even in the structure in Fig. 3, since the first engagement part 13' is positioned closer to (that is, above the first air passage 10) the upper bottom surface 12a than the first air passage intermediate surface P1, which is an intermediate surface between the partitioning surface S1 and the upper bottom surface 12a facing the partitioning surface S1, the possibility that the rain water W1 reaches the first engagement part 13' can be reduced and water leakage to the intermediate scroll outer peripheral surface 30b' can be prevented.

Next, operation in the all outside air mode in which the outside air AE is taken into the second air passage 20 in addition to the first air passage 10 will be described.

First, the motor M is started up and the rotary shaft Ma and the fan F are rotated to generate an air flow for blowing the air within the vehicle air conditioner toward the interior of the vehicle.

The position of the first door 43, the flow of the outside air AE flowing through the first air passage 10, and the flow of the rain water W1 taken into the first air passage 10 are the same as in the operation in the two-layer flow mode described above.

The second door 44 opens the side of the first door 43 and closes the other part (the part of the inside air introduction port 42 away from the outside air introduction port 41) 42b of the inside air introduction port (not illustrated). With this, the outside air AE flows through the other side of the filter 45 via the second door 44, passes through the inside of the separation cylinder 50, the second impeller 21, the unit second air passage 20a, the cooling heat exchanger 150, the unit second air passage 20b, and the heating heat exchanger in sequence, and is blown to the outside of the vehicle through the blowout opening.

The outside air AE (not illustrated) flowing through the second air passage 20 may include the rain water W1. The rain water W1 is taken into the intake part 40 through the outside air introduction port 41, passes through the other side of the filter 45, the inside of the separation cylinder 50, the second impeller 21, the unit second air passage 20a, the cooling heat exchanger 150, and the drain hole 160 in sequence, and is exhausted to the outside of the vehicle. When the freezing cycle is started up and condensed water is generated by the cooling heat exchanger, the rain water W1 passes through the drain hole 160 together with the condensed water W2 and is exhausted to the outside of the vehicle through the drain hole 160.

Although not illustrated, since the rain water W1 having been blown from the second impeller 21 has a specific gravity larger than air, the rain water W1 is blown to the part below the second air passage 20 and then coagulated.

In the centrifugal blower unit 1 illustrated in Fig. 2, a second engagement part 23 formed by the intermediate scroll member 30 and the second scroll member 22 is positioned above the second air passage 20. More specifically, the second engagement part 23 is positioned closer to a partitioning surface S2 of the partitioning part S close to the second air passage than a second air passage intermediate surface P2, which is an intermediate surface between the partitioning surface S2 and a lower bottom surface 22a of the second scroll member 22 facing the partitioning surface S2. Since the second engagement part 23 is positioned above the lower bottom surface 22a as described above, the possibility that the rain water W1 having been blown below the second air passage 20 and then coagulated reaches the second engagement part 23 can be reduced, thereby preventing water leakage to a second scroll outer peripheral surface 22b.

As illustrated in Fig. 2, an engagement projecting part 22c of the second scroll member 22 to be engaged with the intermediate scroll member 30 preferably projects toward the part above the second engagement part 23. If rain water reaches the second engagement part 23 and enters the gap, since the projecting part 22c projects toward the part above the second engagement part 23, water leakage to the second scroll outer peripheral surface 22b can be suppressed by gravity.

Although the centrifugal blower unit 1 or 1' of one-side suction type, which inhales air from one side of the fan F, has been described above with reference to Figs. 1 to 3, the invention is not limited to this example. For example, the invention is applicable to a centrifugal blower unit of both-side suction type in which the suction direction by the first impeller and the suction direction by the second impeller are opposite to each other in the shaft direction of the rotary shaft. In addition, it is not excluded to provide, in the partitioning part S, a communicating hole through which the first air passage 10 communicates with the second air passage 20 so that water in the first air passage 10 flows to the second air passage 20. By providing the communicating hole, occurrence of water leakage to the outside of the centrifugal blower unit from the first engagement part 13 can be prevented more reliably.

Since the vehicle air conditioner according to the invention can be manufactured industrially and can become the target of commerce, the invention has economic value and can be utilized industrially.

### Description of Reference Numerals and Signs

- 1, 1:: centrifugal blower unit
- 10:: first air passage
- 10a, 10b:: unit first air passage
- 20a, 20b:: unit second air passage
- 11:: first impeller
- 12, 12':: first scroll member
- 12a:: upper bottom surface
- 12c:: projecting part
- 13, 13':: first engagement part
- 20:: second air passage
- 21:: second impeller
- 22:: second scroll member
- 22a:: lower bottom surface
- 22b:: second scroll outer peripheral surface
- 22c:: projecting part
- 23, 23':: second engagement part
- 30, 30':: intermediate scroll member
- 30b, 30b':: intermediate scroll outer peripheral surface
- 30c:: projecting part
- 40:: intake part
- 41:: outside air introduction port
- 42:: inside air introduction port
- 43:: first door
- 44:: second door
- 45:: filter
- 50:: separation cylinder
- 50a:: upstream end of separation cylinder
- 50b:: downstream end of separation cylinder
- 100:: air conditioning unit
- 101:: unit case
- 150:: cooling heat exchanger
- 160:: drain hole
- AE:: outside air
- AR:: inside air
- B:: bell mouth
- C:: connection part
- F:: fan
- Fa:: cone part
- M:: motor
- Ma:: rotary shaft
- Mx:: shaft center of rotary shaft
- P1:: first air passage intermediate surface
- P2:: second air passage intermediate surface
- S:: partitioning part
- Sa, Sb:: unit partitioning part
- W1:: rain water
- W2:: condensed water

## Claims

1. A centrifugal blower unit (1, 1') to be applied to a two-layer flow vehicle air conditioner including a first air passage (10) and a second air passage (20) partitioned vertically by a partitioning part (S), the two-layer flow vehicle air conditioner having a two-layer flow mode in which outside air (AE) is introduced to the first air passage and inside air (AR) is introduced to the second air passage, the centrifugal blower unit comprising:
a first impeller (11) disposed in the first air passage;
a second impeller (21) disposed in the second air passage;
a motor (M) having a rotary shaft;
an intermediate scroll member (30) having the partitioning part (S);
a spiral first scroll member (12) forming the first air passage by being engaged with the intermediate scroll member; and
a spiral second scroll member (22) forming the second air passage by being engaged with the intermediate scroll member (30);
**characterized in that** a first engagement part (13) formed by the intermediate scroll member and the first scroll member is positioned closer to an upper bottom surface (12a) than a first air passage intermediate surface (P1, P1') that is an intermediated surface between the partitioning part (S) and the upper bottom surface (12a) of the first scroll member (12), the upper bottom surface (12a) facing the partitioning part.

2. The centrifugal blower unit according to claim 1,
wherein the intermediate scroll member (30) integrally includes a spiral intermediate scroll outer peripheral surface (30b) extending substantially along a shaft direction of the rotary shaft and the partitioning part (S), and
wherein the partitioning part (S) is a surface extending from the intermediate scroll outer peripheral surface (30b) substantially along a surface orthogonal to the shaft direction of the rotary shaft.

3. The centrifugal blower unit according to claim 1 or 2,
wherein the first engagement part (13) is positioned closer to the upper bottom surface (12a, 12a') than an upper bottom surface side end part (11a) of the first impeller.

4. The centrifugal blower unit according to any one of claims 1 to 3,
wherein a second engagement part (23) formed by the intermediate scroll member and the second scroll member is positioned closer to the partitioning part than a second air passage intermediate surface (P2) that is an intermediate surface between the partitioning part (S) and a lower bottom surface (22a) of the second scroll member (22), the lower bottom surface (22a) facing the partitioning part.

5. The centrifugal blower unit according to any one of claims 1 to 4
wherein the second scroll member (22) integrally includes a spiral second scroll outer peripheral surface (22b) extending substantially along the shaft direction of the rotary shaft and the lower bottom surface (22a) facing the partitioning part, and
wherein the lower bottom surface (22a) is a surface extending from the second scroll outer peripheral surface (22b) substantially along a surface orthogonal to the shaft direction of the rotary shaft.

## Patentansprüche

1. Zentrifugalgebläseeinheit (1, 1'), anzubringen an einer eine Zweischichtströmung aufweisenden Fahrzeugklimaanlage, die einen ersten Luftdurchlass (10) und einen zweiten Luftdurchlass (20) umfasst, die durch ein Trennteil (S) vertikal getrennt sind, wobei die eine Zweischichtströmung aufweisende Fahrzeugklimaanlage einen Zweischichtströmungsmodus aufweist, in dem Außenluft (AE) zu dem ersten Luftdurchlass eingeleitet wird und Innenluft (AR) zu dem zweiten Luftdurchlass eingeleitet wird, wobei die Zentrifugalgebläseeinheit Folgendes umfasst:
ein erstes Laufrad (11), das in dem ersten Luftdurchlass angeordnet ist,
ein zweites Laufrad (21), das in dem zweiten Luftdurchlass angeordnet ist,
einen Motor (M), der eine Drehwelle aufweist,
ein zwischenliegendes Schneckenelement (30), das das Trennteil (S) aufweist,
ein spiralförmiges erstes Schneckenelement (12), das den ersten Luftdurchlass bildet, indem es mit dem zwischenliegenden Schneckenelement in Eingriff steht, und
ein spiralförmiges zweites Schneckenelement (22), das den zweiten Luftdurchlass bildet, indem es mit dem zwischenliegenden Schneckenelement (30) in Eingriff steht,
**dadurch gekennzeichnet, dass**
ein erstes Eingriffsteil (13), das durch das zwischenliegende Schneckenelement und das erste Schneckenelement gebildet ist, näher an einer oberen Bodenfläche (12a) als eine Zwischenfläche (P1, P1') des ersten Luftdurchlasses positioniert ist, die eine Zwischenfläche zwischen dem Trennteil (S) und der oberen Bodenfläche (12a) des ersten Schneckenelementes (12) ist, wobei die obere Bodenfläche (12a) dem Trennteil zugewandt ist.

2. Zentrifugalgebläseeinheit nach Anspruch 1,
wobei das zwischenliegende Schneckenelement (30) einstückig eine Außenumfangsfläche (30b) des spiralförmigen zwischenliegenden Schneckenelements umfasst, die sich im Wesentlichen entlang einer Wellenrichtung der Drehwelle und dem Trennteil (S) erstreckt, und
wobei das Trennteil (S) eine Fläche ist, die sich von der Außenumfangsfläche (30b) des zwischenliegenden Schneckenelements im Wesentlichen entlang einer rechtwinklig zu der Wellenrichtung der Drehwelle verlaufenden Fläche erstreckt.

3. Zentrifugalgebläseeinheit nach Anspruch 1 oder 2,
wobei das erste Eingriffsteil (13) näher an der oberen Bodenfläche (12a, 12a') als ein auf der Seite der oberen Bodenfläche liegendes Endteil (11a) des ersten Laufrads positioniert ist.

4. Zentrifugalgebläseeinheit nach einem der Ansprüche 1 bis 3,
wobei ein zweites Eingriffsteil (23), das durch das zwischenliegende Schneckenelement und das zweite Schneckenelement gebildet ist, näher an dem Trennteil als eine Zwischenfläche (P2) des zweiten Luftdurchlasses positioniert ist, die eine Zwischenfläche zwischen dem Trennteil (S) und einer unteren Bodenfläche (22a) des zweiten Schneckenelementes (22) ist, wobei die untere Bodenfläche (22a) dem Trennteil zugewandt ist.

5. Zentrifugalgebläseeinheit nach einem der Ansprüche 1 bis 4,
wobei das zweite Schneckenelement (22) einstückig eine Außenumfangsfläche (22b) des spiralförmigen zweiten Schneckenelements umfasst, die sich im Wesentlichen entlang der Wellenrichtung der Drehwelle und der dem Trennteil zugewandten unteren Bodenfläche (22a) erstreckt, und
wobei die untere Bodenfläche (22a) eine Fläche ist, die sich von der Außenumfangsfläche (22b) des zweiten Schneckenelements im Wesentlichen entlang einer rechtwinklig zu der Wellenrichtung der Drehwelle verlaufenden Fläche erstreckt.

## Revendications

1. Unité à soufflante centrifuge (1, 1') destinée à être appliquée sur un climatiseur de véhicule à écoulement bicouche incluant un premier passage d'air (10) et un second passage d'air (20) séparés verticalement par une partie de séparation (S), le climatiseur de véhicule à écoulement bicouche ayant un mode à écoulement bicouche dans lequel de l'air extérieur (AE) est introduit dans le premier passage d'air et de l'air intérieur (AR) est introduit dans le second passage d'air, l'unité à soufflante centrifuge étant **caractérisée** comprenant :
une première roue (11) disposée dans le premier passage d'air ;
une seconde roue (21) disposée dans le second passage d'air ;
un moteur (M) ayant un arbre rotatif ;
un élément volute intermédiaire (30) ayant la partie de séparation (S) ;
un premier élément volute en spirale (12) formant le premier passage d'air en étant en prise avec l'élément volute intermédiaire ; et
un second élément volute en spirale (22) formant le second passage d'air en étant en prise avec l'élément volute intermédiaire (30) ;
**caractérisé en ce que**
une première partie d'entrée en prise (13) formée par l'élément volute intermédiaire et le premier élément volute est positionnée plus près d'une surface de fond supérieure (12a) qu'une première surface intermédiaire de passage d'air (P1, P1') qui est une surface intermédiaire entre la partie de séparation (S) et la surface de fond supérieure (12a) du premier élément volute (12), la surface de fond supérieure (12a) faisant face à la partie de séparation.

2. Unité à soufflante centrifuge selon la revendication 1, dans laquelle l'élément volute intermédiaire (30) inclut de façon monobloc une surface périphérique extérieure de volute intermédiaire en spirale (30b) s'étendant sensiblement le long d'une direction d'arbre de l'arbre rotatif et de la partie de séparation (S), et
dans laquelle la partie de séparation (S) est une surface s'étendant depuis la surface périphérique extérieure de volute intermédiaire (30b) sensiblement le long d'une surface orthogonale à la direction d'arbre de l'arbre rotatif.

3. Unité à soufflante centrifuge selon la revendication 1 ou 2,
dans laquelle la première partie d'entrée en prise (13) est positionnée plus près de la surface de fond supérieure (12a, 12a') qu'une partie d'extrémité côté surface de fond supérieure (11a) de la première roue.

4. Unité à soufflante centrifuge selon l'une quelconque des revendications 1 à 3,
dans laquelle une seconde partie d'entrée en prise (23) formée par l'élément volute intermédiaire et le second élément volute est positionnée plus près de la partie de séparation qu'une seconde surface intermédiaire de passage d'air (P2) qui est une surface intermédiaire entre la partie de séparation (S) et une surface de fond inférieure (22a) du second élément volute (22), la surface de fond inférieure (22a) faisant face à la partie de séparation.

5. Unité à soufflante centrifuge selon l'une quelconque des revendications 1 à 4
dans laquelle le second élément volute (22) inclut de façon monobloc une seconde surface périphérique extérieure de volute en spirale (22b) s'étendant sensiblement le long de la direction d'arbre de l'arbre rotatif et la surface de fond inférieure (22a) faisant face à la partie de séparation, et
dans laquelle la surface de fond inférieure (22a) est une surface s'étendant depuis la seconde surface périphérique extérieure de volute (22b) sensiblement le long d'une surface orthogonale à la direction d'arbre de l'arbre rotatif.
